# DEMANDE DE BREVET EUROPEEN

(11) **EP 1 443 154 A1**
(43) Date de publication de la demande: **04.08.2004**
(21) Numéro de dépôt: 03293328.5
(22) Date de dépôt: 24.12.2003
(51) Int. Cl.: E04B 1/86

(54) **Panneau d'isolation acoustique**

(30) Priorité: 24.01.2003 FR 0300773
(71) Demandeur: HUTCHINSON, 75008 Paris (FR)
(72) Inventeur: Pompei, Michel, 91700 Villiers sur Orge (FR)
(74) Mandataire: Jacquard, Philippe Jean-Luc

(57) **Abrégé**

L'Invention concerne un panneau d'isolation acoustique comprenant une paroi dite excitatrice (1) destinée à être en contact avec un fluide dans lequel se trouve une source de bruit et une paroi dite réceptrice (2) destinée à être en contact avec un fluide dans lequel on veut atténuer le bruit, et comprenant entre lesdites deux parois, un élément intermédiaire (3). Le panneau est caractérisé en ce que l'élément intermédiaire est maintenue sur au moins une partie de son contour par au moins un élément souple (8) disposé entre la paroi intermédiaire (3) et la paroi réceptrice (2).

## Description

La présente invention concerne un panneau acoustique comprenant une paroi dite excitatrice destinée à être en contact avec un fluide dans lequel se trouve une source de bruit et une paroi dite réceptrice destinée à être en contact avec un fluide dans lequel on veut atténuer le bruit, ainsi qu'un élément intermédiaire acoustiquement absorbant, disposé entre les deux parois.

La paroi intermédiaire est dans l'art connu souvent constituée d'une feuille en caoutchouc interposée entre deux couches de matériau absorbant, cet ensemble étant pris en sandwich entre les deux parois, émettrice et réceptrice.

L'inconvénient d'une telle solution est que l'on ne peut pas ajuster aisément la fréquence critique de cette paroi et que les couches de matériau absorbant doivent assurer le maintien de cette feuille, ce qui limite le choix aux matériaux à ceux présentant une tenue mécanique suffisante. Une solution connue consiste d'une part, à recouvrir cette paroi d'un clinquant métallique dont on ajuste l'épaisseur et la masse pour réaliser l'ajustement de la raideur et de la masse surfacique et d'autre part, à assurer le maintien de la feuille en caoutchouc en la fixant par un moyen approprié à la paroi excitatrice.

L'idée de base de la présente invention est de suspendre élastiquement la paroi intermédiaire par rapport à la paroi réceptrice.

On obtient ainsi un double avantage.

D'une part, la paroi intermédiaire n'est pas liée directement à la paroi réceptrice, ce qui améliore les performances.

D'autre part, la paroi intermédiaire constitue avec la paroi excitatrice un système à deux masses suspendues qui présente un meilleur effet de filtrage, d'où une meilleure isolation acoustique procurée par le panneau, au moins dans une bande de fréquence.

L'invention concerne un panneau d'isolation acoustique comprenant une paroi dite excitatrice destinée à être en contact avec un fluide dans lequel se trouve une source de bruit et une paroi dite réceptrice destinée à être en contact avec un fluide dans lequel on veut atténuer le bruit, et comprenant entre lesdites deux parois, au moins un élément intermédiaire caractérisé en ce que l'élément intermédiaire comporte sur au moins une partie de son contour au moins un élément souple assurant un couplage élastique entre l'élément intermédiaire et la paroi réceptrice.

Au moins un dit élément souple peut être un plot de suspension en matériau souple, notamment en élastomère. Il peut également être une paroi souple, notamment en élastomère, en un ou plusieurs tronçons s'étendant sur au moins une partie du pourtour de la paroi intermédiaire.

L'élément intermédiaire peut être constitué par une paroi, par exemple une feuille, notamment en élastomère ou en élastomère-feuillard métallique interposée entre deux couches de matériau acoustiquement absorbant, l'ensemble feuille-couches de matériau absorbant étant pris en sandwich entre les deux parois, excitatrice et réceptrice.

Un ou plusieurs plots de suspension en matériau souple peuvent être disposés le long du pourtour de la feuille.

Le panneau peut comporter un cadre rigide solidaire de la paroi réceptrice de la feuille intermédiaire, au moins un élément souple étant fixé entre le cadre et l'élément intermédiaire, par exemple en étant interposé entre le cadre et l'élément intermédiaire, ou bien encore entre le contour d'une ouverture du cadre et la périphérie de l'élément intermédiaire.

Le panneau peut comporter un cadre rigide solidaire de l'élément intermédiaire, au moins un dit élément souple étant fixé entre le cadre et la paroi réceptrice.

Dans l'un ou l'autre cas, au moins un élément souple peut être un plot de suspension en matériau souple, ou bien une paroi souple en un ou plusieurs tronçons qui par exemple s'étend sur au moins une partie du périmètre d'une ouverture du cadre rigide.

Le cadre rigide peut être en un matériau de type nid d'abeille présentant un réseau d'alvéoles, notamment hexagonales, en sandwich entre deux plaques rigides.

L'intérieur du cadre définit une cavité qui peut être au moins partiellement remplie d'un matériau acoustiquement absorbant, par exemple de la laine de verre.

Le panneau peut être caractérisé en ce que le cadre rigide (10) présente une ou plusieurs ouvertures et en ce que le panneau comporte un élément intermédiaire qui recouvre au moins le contour extérieur du cadre rigide.

Le panneau peut être caractérisé en ce que le cadre rigide présente plusieurs ouvertures et en ce que le panneau comporte plusieurs éléments intermédiaires dont chacun recouvre une ou plusieurs ouvertures du cadre rigide.

Au moins une dite ouverture peut être remplie de matériau acoustiquement absorbant.

D'autres caractéristiques et avantages de l'invention apparaîtront à la lecture de la description ci-après en liaison avec les dessins, dans lesquels :
- les figures 1 et 2 illustrent deux modes de réalisation d'une première variante de l'invention ;
- la figure 3 illustre une deuxième variante de l'invention, la figure 3a étant une coupe AA de la figure 3 et la figure 3b une variante de la figure 3a.

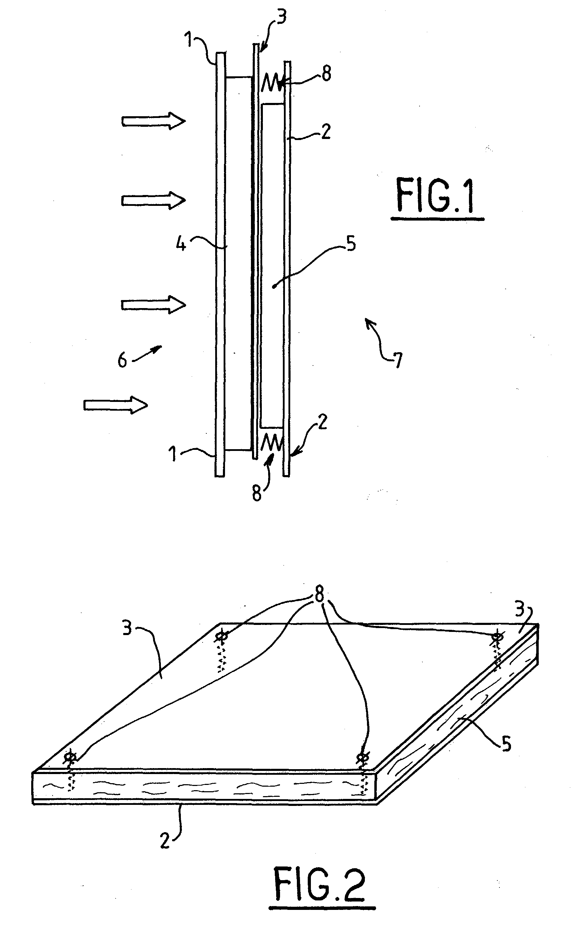

A la figure 1, un panneau acoustique composite comprend une paroi excitatrice 1 disposée du côté des ondes sonores excitatrices (figurées par des flèches) dans un fluide 6, et une paroi réceptrice 2 disposée à l'opposé et en contact avec un fluide 7 dans lequel on veut atténuer le bruit. En général, la paroi réceptrice 2 est rigide ou semi-rigide. Dans le cadre de l'invention, ce peut être aussi une paroi souple, par exemple une feuille de caoutchouc.

Une paroi intermédiaire (3, 4, 5) est prise en sandwich entre les deux parois excitatrice 1 et réceptrice 2 et comprend successivement une première couche 4 en matériau acoustiquement absorbant qui peut être fixée, par exemple par collage, à la paroi excitatrice 1, une feuille intermédiaire 3, et une deuxième couche 5 en matériau acoustiquement absorbant qui peut être fixée, par exemple par collage, à la paroi réceptrice 2. La feuille 3 ou plaque est par exemple en caoutchouc souple ou semi-rigide ou en un composite caoutchouc-feuillard métallique. Elle peut être solidarisée, par exemple par collage, aux couches absorbantes 4 et 5. Selon l'invention, la feuille 3 est suspendue par une ou plusieurs liaisons souples, par exemple des plots 8, par rapport à la paroi réceptrice 2.

Comme représenté à la figure 2 (vue partielle), on peut utiliser entre la plaque 3 et la paroi réceptrice 2 des plots de suspension 8 en caoutchouc, d'un type classique. On peut leur substituer une suspension par une ou plusieurs bandes souples pour assurer un suspension répartie sur une surface plus importante.

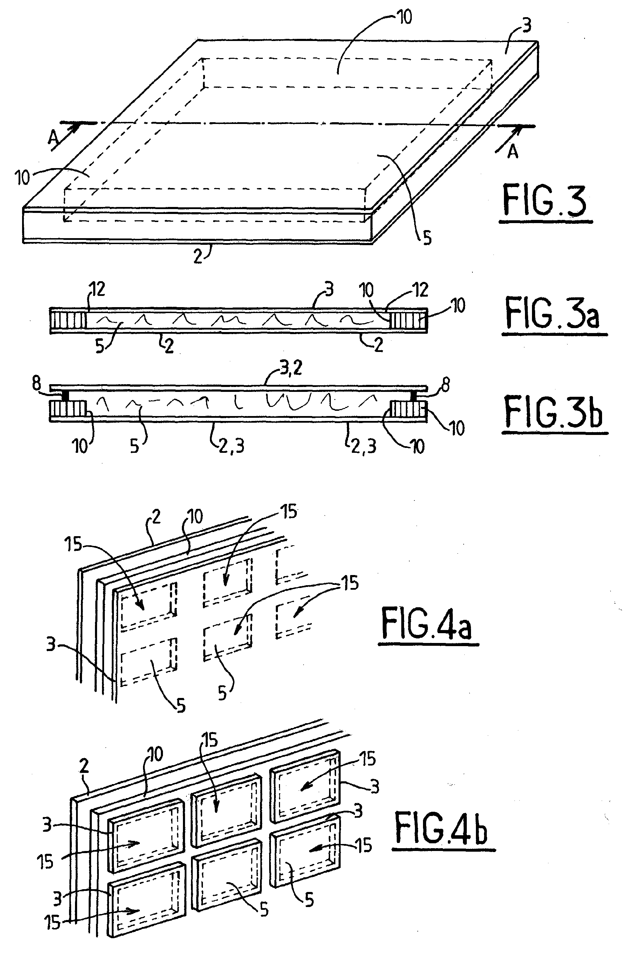

Dans la variante représentée aux figures 3 et 3a, la paroi intermédiaire n'est pas suspendue par une liaison directe à la paroi réceptrice 5. On met en oeuvre un cadre rigide 10 solidaire de la paroi réceptrice 2 et la feuille ou plaque intermédiaire 3 est reliée élastiquement au cadre 10, par exemple par un système de plots élastiques 8 ou par au moins une paroi souple 12. Cette paroi souple 12 est fixée sur le pourtour interne du cadre 10 (par un système de vis-rondelles ou par collage par points), et sur la périphérie de la plaque intermédiaire 3. L'ensemble paroi 2 - cadre 10 - plaque intermédiaire 3, constitue une cavité qui peut être remplie d'absorbant acoustique qui forme la couche 5.

Dans le mode de réalisation de la figure 3b, on dispose entre la plaque intermédiaire 3 et le cadre 10, solidaire de la paroi 2 des plots 8 (ou bien une ou plusieurs bandes souples), ou bien on dispose entre la paroi 2 et le cadre 10 solidaire de la plaque intermédiaire 3, des plots 8 (ou bien une ou plusieurs bandes souples). Dans ces deux cas, la paroi intermédiaire 3 peut être souple, semi-rigide ou rigide.

Le cadre 10 est conçu pour avoir une raideur suffisante et il peut être par exemple en un matériau tel que du nid d'abeilles, avec un réseau d'alvéoles, par exemple hexagonales, en sandwich entre deux plaques rigides.

L'élasticité procurée par les plots 8 (ou par la ou les paroi(s) souple(s) 12 fixée au cadre 10) et accessoirement celle des couches 4 et 5 (en général en un matériau compressible tel que la fibre de verre, le feutre, ou bien encore une mousse de polyamide de poly-imide, de polyuréthane ou de polyéthylène) constituent les paramètres du couplage masse-ressort entre la paroi intermédiaire 3 et la paroi réceptrice 2. L'élasticité des plots 8 ou de la ou des paroi(s) souple(s) 12 détermine la gamme de fréquences où l'effet recherché est obtenu.

Le cadre 10 peut comporter plusieurs ouvertures, par exemple un réseau d'ouvertures 15, comme représenté aux figures 4a et 4b. Dans le cas de la figure 4a, il y a une seule plaque intermédiaire 3 qui recouvre le cadre 10 et donc ses ouvertures.

Dans le cas de la figure 4b, il y a plusieurs plaques intermédiaires 3, par exemple une plaque intermédiaire 3 par ouverture.

Au moins une ouverture 15 peut être remplie de matériau acoustiquement absorbant.

## Revendications

1. Panneau d'isolation acoustique comprenant une paroi dite excitatrice destinée à être en contact avec un fluide dans lequel se trouve une source de bruit et une paroi dite réceptrice destinée à être en contact avec un fluide dans lequel on veut atténuer le bruit, et comprenant entre lesdites deux parois, au moins un élément intermédiaire **caractérisé en ce que** l'élément intermédiaire (3) comporte sur au moins une partie de son contour au moins un élément (8, 12) assurant un couplage élastique seulement entre l'élément intermédiaire (3, 10) et la paroi réceptrice (2).

2. Panneau selon la revendication 1, **caractérisé en ce que** le ou les éléments (8, 12) sont situés seulement sur le contour de l'élément intermédiaire (3) ou sur au moins une partie de celui-ci.

3. Panneau selon une des revendications 1 ou 2, **caractérisé en ce que** l'élément intermédiaire est constituée par une plaque intermédiaire rigide ou semi-rigide (3) interposée entre deux couches (4, 5) de matériau acoustiquement absorbant, l'ensemble constitué par la plaque intermédiaire (3) et les deux couches (4, 5) de matériau absorbant étant pris en sandwich entre lesdites deux parois (1, 2).

4. Panneau selon une des revendications 1 à 3, **caractérisé en ce qu'**au moins un élément souple est un plot de suspension (8) en matériau souple, notamment en élastomère.

5. Panneau selon la revendication 4, **caractérisé en ce qu'**il comporte une pluralité de plots de suspension (8) répartis le long du pourtour de la feuille intermédiaire (3).

6. Panneau selon une des revendications 3 ou 4, **caractérisé en ce qu'**au moins un élément souple est une bande en matériau souple, notamment en élastomère.

7. Panneau selon une des revendications 1 à 3, **caractérisé en ce qu'**il comporte un cadre rigide (10) solidaire de la paroi réceptrice (2) et **en ce qu'**au moins un élément souple est disposé entre le cadre (10) et l'élément intermédiaire (3).

8. Panneau selon la revendication 7, **caractérisé en ce qu'**au moins un dit élément souple est interposé entre le cadre (10) et l'élément intermédiaire (3).

9. Panneau selon la revendication 7, **caractérisé en ce qu'**au moins un dit élément souple est fixé entre le contour interne d'une ouverture du cadre et la périphérie de l'élément intermédiaire (3).

10. Panneau selon la revendication 3, **caractérisé en ce qu'**il comporte un cadre rigide (10) solidaire de la feuille intermédiaire (3) , et **en ce qu'**au moins un dit élément souple est fixé entre le cadre (10) et la paroi réceptrice (2) .

11. Panneau selon une des revendications 7 à 10, **caractérisé en ce qu'**au moins un élément souple est une paroi souple (12) en un ou plusieurs tronçons.

12. Panneau selon une des revendications 7 à 11, **caractérisé en ce que** le cadre rigide (10) est un réseau alvéolaire de type nid d'abeilles présentant un réseau d'alvéoles, notamment hexagonales, en sandwich entre deux plaques rigides.

13. Panneau selon une des revendications 7 à 12, **caractérisé en ce que** le cadre rigide (10) définit une cavité interne qui est au moins partiellement remplie d'un matériau acoustiquement isolant (5).

14. Panneau selon une des revendications 7 à 13, **caractérisé en ce que** le cadre rigide (10) présente une ou plusieurs ouvertures et **en ce que** le panneau comporte un élément intermédiaire qui recouvre au moins le contour extérieur du cadre rigide (10).

15. Panneau selon une des revendications 7 à 13, **caractérisé en ce que** le cadre rigide (10) présente plusieurs ouvertures et **en ce que** le panneau comporte plusieurs éléments intermédiaires dont chacun recouvre une ou plusieurs ouvertures du cadre rigide (10).

16. Panneau selon une des revendications 14 ou 15, **caractérisé en ce qu'**au moins une dite ouverture (15) est remplie de matériau acoustiquement absorbant (5).
